# FASCICULE DE BREVET EUROPEEN

(11) **EP 3 213 644 B1**
(45) Date de publication et mention de la délivrance du brevet: **19.09.2018**
(21) Numéro de dépôt: 17158987.2
(22) Date de dépôt: 02.03.2017
(51) Int. Cl.: A23L 17/00, A23P 30/00, A23P 30/20

(54) **PROCÉDÉ DE FABRICATION D'UN PRODUIT ALIMENTAIRE À BASE DE SURIMI SE PRÉSENTANT SOUS LA FORME D'UNE NOIX DE PECTINIDÉ, TELLE UNE NOIX DE SAINT-JACQUES, PRODUIT ET CHAÎNE DE FABRICATION CORRESPONDANTS**
VERFAHREN ZUR HERSTELLUNG EINES LEBENSMITTELS AUF BASIS VON SURIMI IN FORM EINER NUSS PECTINIDAE, WIE SANKT JAKOBS MUSCHELN, DEREN PRODUKTE UND HERSTELLUGSKETTE
METHOD FOR MANUFACTURING A SURIMI BASED FOOD PRODUCT IN THE FORM OF A PECTINIDE WHEAT, SUCH AS A SAINT JAKOBS SHELL, PRODUCT AND MANUFACTURING CHAIN THEREOF

(30) Priorité: 03.03.2016 FR 1651809
(43) Date de publication de la demande: 06.09.2017
(73) Titulaire: Fleury Michon, 85700 Pouzauges (FR)
(72) Inventeur: BERTIN, Jérôme, 85290 TALLUD-SAINT-GEMME (FR)
(74) Mandataire: Vidon Brevets & Stratégie

(56) Documents cités:
- EP-A1- 2 305 050
- EP-A2- 0 398 315
- FR-A1- 2 632 160
- US-A- 4 544 561
- US-A- 4 919 959
- US-A1- 2015 132 434

## Description

### 1. Domaine de l'invention

Le domaine de l'invention est celui de l'agroalimentaire.

L'invention concerne plus particulièrement la fabrication industrielle de produits frais ou surgelés à base de surimi pouvant être consommés directement par le consommateur.

### 2. Art antérieur

Parmi les produits frais qui peuvent être consommés directement par le consommateur, sans préparation, on connaît depuis longtemps les bâtonnets de surimi.

Le procédé de fabrication de ces bâtonnets de surimi est bien connu de l'homme du métier. Il consiste d'abord à préparer une pâte comportant notamment de la chair de poisson, et de l'eau, puis à étaler cette pâte sous la forme d'une bande d'environ 1 à 2 mm d'épaisseur et d'une largeur d'environ 13 cm. Cette bande est précuite, puis enroulée pour former un rouleau de surimi qui est par la suite découpé en bâtonnets. Ces bâtonnets sont pasteurisés lors d'une cuisson complémentaire.

Les bâtonnets de surimi classiques ne permettent pas une variété de goût suffisante.

Il a donc été proposé de mélanger la préparation de surimi base à différents additifs, tels que des arômes qui sont choisis en fonction du goût que l'on souhaite donner au produit. On peut, par exemple, ajouter des arômes de crabe ou de langouste. Le produit est ensuite travaillé et mis en forme, par exemple, sous une forme de bâtonnet, de rondelle ou de médaillon.

US4 919 959 décrit une méthode de production de surimi imitant les coquilles Saint Jacques et obtenus par extrusion et traitement à haute température. Aucun produit à base de surimi imitant une noix de coquille Saint-Jacques n'a été commercialisé à ce jour.

### 3. Exposé de l'invention

L'invention répond à ce besoin en proposant un procédé de fabrication d'un produit alimentaire à base de surimi se présentant sous la forme de noix de pectinidés ("Pecten" en latin), tels que les coquilles Saint-Jacques ou les pétoncles, ledit procédé comprenant les étapes suivantes :
- obtention d'une bande de surimi de largeur supérieure à 160 mm à partir d'une prémêlée, ou pâte de surimi,
- scarification de ladite bande de surimi,
- enroulement de ladite bande de surimi scarifiée afin de former un rouleau de surimi,
- découpe du rouleau pour former des noix de surimi.

L'invention propose ainsi un procédé de fabrication d'un produit alimentaire à base de surimi imitant une noix de pectinidé, telle une noix de coquille Saint-Jacques, ou une noix de pétoncle.

Une telle noix est obtenue à partir d'une bande de surimi de largeur supérieure aux bandes de surimi classiquement utilisées pour former des bâtonnets de surimi. La largeur de la bande est ainsi supérieure à 160 mm.

Selon une mise en oeuvre particulière, la largeur de la bande de surimi est comprise entre 160 et 260 mm.

Une fois la bande scarifiée, enroulée et découpée, on obtient un produit alimentaire à base de surimi se présentant sous la forme de noix de Saint-Jacques, par exemple, dont l'aspect et la texture sont proches du produit naturel.

Le choix d'une bande de largeur supérieure à 160 mm permet, une fois que la bande est scarifiée et enroulée, d'obtenir une noix dont le diamètre est proche d'une noix naturelle de pectinidé et supérieur à celui d'un bâtonnet de surimi, et de retrouver la texture tubulaire et fibrée d'une noix naturelle de pectinidé.

Ce procédé de fabrication facile de noix de surimi permet d'offrir de nouveaux goûts, plus variés, et une nouvelle texture au consommateur.

Le produit obtenu présente l'aspect et la couleur naturelle attendue et recherchée par le consommateur.

Selon un aspect particulier de l'invention, ladite bande de surimi est obtenue par extrusion.

Selon un aspect particulier de l'invention, ladite bande de surimi est pré-cuite préalablement à l'étape de scarification.

La bande est ensuite enroulée puis découpée en noix.

Selon un aspect particulier de l'invention, le procédé comprend une étape de surgélation ou de croûtage desdites noix de surimi.

Lorsqu'elles sont croûtées, les noix sont pasteurisées après avoir été placées dans un emballage primaire.

Les noix ainsi traitées conservent toute leur texture, leur saveur et peuvent être conservés plus longtemps.

Selon un aspect particulier de l'invention, la prémêlée comprend :
- de la pâte de chair de poisson broyée,
- de l'eau,
- de la fécule alimentaire,
- de l'amidon de blé,
- du sel,
- du lait écrémé en poudre ou du blanc d'oeuf, et
- de l'huile de colza non hydrogéné, et
- éventuellement un ou des arôme(s).

Cette composition/formulation particulière permet une plus grande solidité et élasticité de la pâte de départ (appelée également « prémêlée »).

Selon un aspect particulier de l'invention, lors de ladite étape de scarification de ladite bande de surimi, la profondeur de pénétration des outils de scarification dans ladite bande est supérieure à 0,2 mm.

La scarification sur la bande disposée à plat est mise en oeuvre sur les deux faces de la bande.

Cette scarification prononcée et plus profonde que celle qui est effectuée de façon habituelle pour les bâtonnets de surimi permet d'obtenir une empreinte forte sur la bande sans couper cette dernière de façon à obtenir un produit fibré. Cette scarification est mise en oeuvre de façon à ne pas provoquer de délitement des bandes, les fibres obtenues devant se tenir et être liées.

L'aspect fibré de la noix obtenue une fois la bande enroulée et découpée est ainsi proche du produit naturel

Selon un aspect particulier de l'invention, au moins une portion de la bande n'est pas scarifiée lors de ladite étape de scarification de ladite bande de surimi.

Cette scarification particulière est avantageuse en ce sens qu'elle permet d'éviter le délitement de la bande en sortie du scarificateur et le délitement de la noix lors de la coupe.

Selon un aspect particulier de l'invention, au moins deux portions de la bande ne sont pas scarifiées lors de ladite étape de scarification de ladite bande de surimi.

Ainsi, la scarification n'est pas appliquée sur toute la longueur de la bande.

Plus précisément, la scarification n'est pas mise en oeuvre sur plusieurs portions de la bande dans le sens de la longueur, ces portions s'étendant sur toute la largeur de la bande. Ainsi, entre deux et huit portions de la bande, par exemple, et en particulier quatre, peuvent ne pas être scarifiées..

On crée ainsi une juxtaposition de fibres tubulaires qui ne sont pas scindées (on évite ainsi le délitement de la bande scarifiée).

Une fois enroulée et découpée, on obtient un amas de fibres typique de la noix de Saint-Jacques ou d'une noix de pectinidé.

La noix présente une texture fibrée en bouche, ferme et fondante (et donc agréable à consommer), typique de la noix de Saint-Jacques ou de celle d'un pectinidé.

Un produit alimentaire à base de surimi se présentant sous la forme de noix de pectinidé ("Pecten" en latin), tel qu'une noix de coquille Saint-Jacques ou une noix de pétoncle, est obtenu par le procédé décrit ci-dessus.

Une telle noix présente une hauteur comprise entre 1 et 2,5 cm, et un diamètre compris entre 2 et 3 cm.

L'invention porte également sur une chaîne de fabrication de produits alimentaires à base de surimi se présentant sous la forme de noix de pectinidés ("Pecten" en latin), tels que des noix de coquille Saint-Jacques ou des noix de pétoncle, comportant :
- des moyens d'obtention d'une bande de surimi à partir d'une prémêlée, ou pâte de surimi,
- des moyens de scarification de ladite bande de surimi,
- un mécanisme d'enroulement de ladite bande de surimi scarifiée afin de former un rouleau de surimi,
- un mécanisme de découpe du rouleau pour former des noix de surimi,
les moyens d'obtention d'une bande de surimi étant adaptés pour obtenir une bande de surimi de largeur supérieure à 160 mm.

Selon un aspect particulier de l'invention, les moyens d'obtention d'une bande de surimi comprennent un mécanisme d'extrusion apte à extruder une bande de surimi de largeur supérieure à 160 mm.

Selon un aspect particulier de l'invention, la chaîne de fabrication comprend un dispositif de pré-cuisson de ladite bande de surimi situé en amont des moyens de scarification.

### 4. Liste des figures

D'autres caractéristiques et avantages de l'invention apparaîtront plus clairement à la lecture de la description suivante d'un mode de réalisation préférentiel, donné à titre de simple exemple illustratif et des dessins annexés, parmi lesquels :
- la figure 1 est un schéma bloc illustrant les principales étapes du procédé de fabrication selon l'invention ;
- les figures 2A et 2B présentent respectivement en vue de coupe et en vue partielle de dessus une bande de surimi scarifiée sur plusieurs portions de sa largeur ;
- la figure 3 est une vue schématique, en perspective, d'une noix de surimi obtenue à l'aide du procédé de l'invention.

### 5. Description détaillée de l'invention

### 5.1 Rappel du principe de l'invention

Le principe de l'invention consiste à fabriquer des noix à base de surimi imitant une noix de pectinidé ("Pecten" en latin), tel qu'une noix de coquille Saint-Jacques ou une noix de pétoncle.

Ces noix de surimi sont vendues prêtes à être consommées, notamment en apéritif ou en entrée, de façon à ce que le consommateur n'ait aucune étape de préparation à effectuer (sinon de les cuire lorsque ces noix sont surgelées).

### 5.2 Fabrication de la noix de surimi

Ces noix de surimi sont fabriquées à partir d'une pâte, ou prémêlée, qui est constituée :
- de chair de poisson broyée,
- d'eau,
- de fécule alimentaire et d'amidon de blé pour la texture,
- de sel,
- de lait écrémé en poudre ou du blanc d'oeuf,
- d'huile de colza non hydrogéné pour le moelleux, et
- éventuellement d'un ou de plusieurs arômes.

Cette composition particulière permet une plus grande solidité et élasticité de la pâte de départ (appelée également « prémêlée »).

La fabrication de la bande de surimi peut être identique à celle d'une bande utilisée pour faire des bâtonnets de surimi classiques.

Le procédé de fabrication de cette bande est bien connu de l'homme du métier.

Il consiste principalement à extruder et étaler de façon continue de la pâte de surimi sur un tambour ou plaque de pré-cuisson (étape S1), de façon à produire une bande d'environ 1 à 2.5 mm d'épaisseur et d'une largeur bien supérieure aux largeurs des bandes destinées à former des bâtonnets de surimi.

Ainsi, la largeur de la bande peut être comprise entre 160 et 260 mm, notamment entre 180 et 240 mm, voire entre 200 et 220 mm.

La largeur de la bande extrudée est, par exemple, d'environ 160 mm.

L'extrudeuse mise en oeuvre sur la chaîne de fabrication est une extrudeuse classique adaptée pour pouvoir extruder une bande d'une telle largeur.

Cette bande, une fois précuite (étape S2), est refroidie (étape S3) et scarifiée (étape S4) avant d'être enroulée (étape S5).

Par la suite, le rouleau est découpé (étape S6) afin former des noix de surimi d'environ de 1 à 2.5 cm de hauteur H, et de diamètre D d'environ 2 à 3 cm.

Selon une mise en oeuvre particulière, les noix de surimi font l'objet d'une étape de congélation, et en particulier de croûtage (étape S7) avant d'être placées dans un emballage primaire (étape S8) dans lequel elles sont pasteurisées (étape S9). Les noix de surimi ainsi conditionnées constituent un produit frais.

Dans une alternative, les noix de surimi font l'objet d'une étape de surgélation (étape S7) au cours de laquelle elles sont refroidit brutalement (quelques minutes), en les exposant intensément à des températures allant de - 18 °C à -35 °C. Grâce à ce procédé, l'eau contenue dans les cellules se cristallise finement limitant ainsi la destruction cellulaire. Les noix ainsi traitées conservent toute leur texture, leur saveur et peuvent être conservés plus longtemps.

Après leur surgélation, les noix de surimi sont conditionnées (étape S8) dans des barquettes, des sachets,, des poches ou des emballages souples de type "doypack" (marque déposée) qui sont scellé(e)s et alors prêt(e)s à être vendu(e)s.

Il est à noter que lorsque les noix sont vendues surgelées, le client ou le consommateur doit appliquer un traitement thermique au produit avant consommation.

Le conditionnement utilisé est fonction du procédé de refroidissement utilisé (congélation, et en particulier croûtage, ou surgélation).

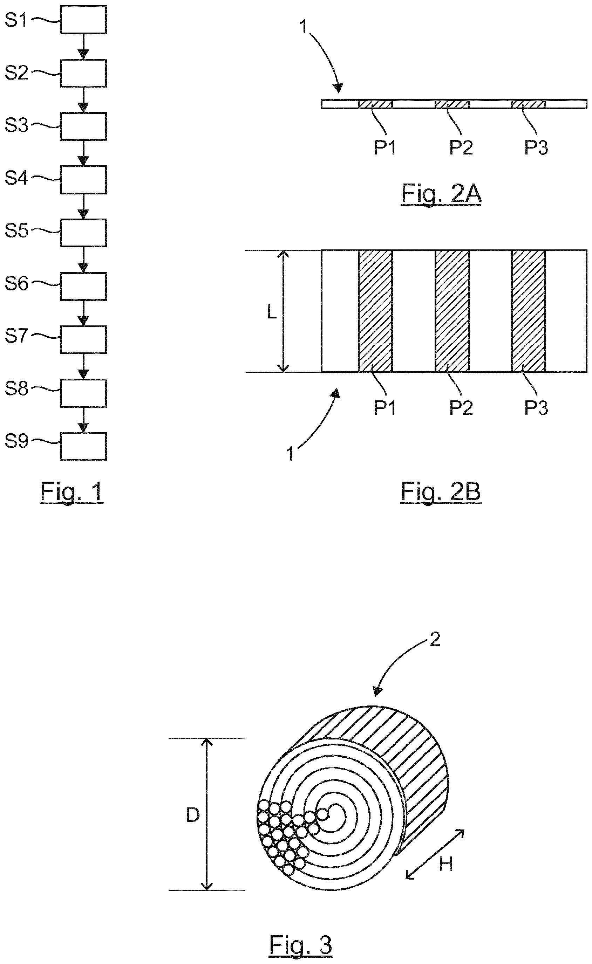

Les étapes principales du procédé de fabrication selon l'invention sont représentées de façon schématique sur la figure 1.

Il est essentiel que la noix décrite présente des propriétés mécaniques satisfaisantes lui permettant d'être saisi par le consommateur sans se déliter et une texture fibrée typique de la noix de Saint-Jacques.

Pour ce faire, on applique une scarification forte à la bande de surimi (étape S4). Par scarification forte, on entend une scarification très supérieure à celle effectuée habituellement sur les bandes de surimi destinées à constituer des bâtonnets de surimi classiques, et caractérisée par une profondeur de pénétration dans la bande de surimi de plus de 0, 2 mm.

Par ailleurs, la scarification n'est appliquée sur toute la longueur de la bande. Ainsi, plusieurs portions, qui s'étendent sur toute la largeur L de la bande, entre deux et huit portions, par exemple, ne sont pas scarifiées.

Dans l'exemple des figures 2A et 2B, trois portions P1, P2, P3 rectangulaires de la bande 1 de surimi ne sont pas scarifiées.

Cette scarification particulière permet d'assurer une meilleure tenue mécanique des noix de surimi, et un aspect fibreux typique de la noix de Saint-Jacques.

Ainsi, les risques de délitement de la noix sont limités.

De façon connue, la bande de surimi est scarifiée par un passage entre deux rouleaux scarificateurs, les dents des rouleaux de scarification pénétrant dans la bande de surimi de façon profonde.

Ces dents permettent la scarification de la bande de surimi sur ses deux faces. Sur la bande de surimi selon l'invention, la profondeur de pénétration des dents de scarification est en effet comprise entre 0.5 et 1 mm (+/- 0,1 mm).

La bande de surimi scarifiée est enroulée (étape S5) en continu grâce à un système d'enroulement connu de l'homme du métier.

La bande de surimi, qui a été auparavant refroidie et scarifiée (étapes S3 et S4), est ainsi acheminée vers le poste d'enroulement par un premier tapis (ou tapis convoyeur, ou convoyeur), puis passe sur un tapis (ou tapis convoyeur, ou convoyeur) d'enroulement dont la vitesse est légèrement supérieure (par exemple 10 à 20% plus rapide) à celle du premier tapis. A titre d'exemple, la vitesse V1 du premier tapis 15 peut être d'environ 10 m/min, et la vitesse V2 du tapis d'enroulement 12 d'environ 11,5 m/min.

Du fait de cette augmentation de vitesse, la bande de surimi est légèrement étirée sur le tapis d'enroulement. Une languette d'enroulement maintient en place un bord de la bande de surimi sur le tapis d'enroulement.

Derrière le tapis d'enroulement, un rouleau d'écartement sensiblement vertical (perpendiculaire au plan défini par le tapis d'enroulement) force la bande à se décaler sur le côté opposé au bord de la bande maintenu par la languette d'enroulement. Entre la languette d'enroulement et le rouleau d'écartement, la bande a alors tendance à s'enrouler naturellement sur elle-même. Elle forme alors un rouleau qui est convoyé sur un tapis intermédiaire.

Par la suite, le rouleau est découpé pour former des noix d'environ 1 à 2.5 cm de hauteur, ces noix étant ensuite surgelées ou croûtées.

On obtient un produit alimentaire à base de surimi se présentant sous la forme de noix de Saint-Jacques, et dont l'aspect et la texture sont proches du produit naturel.

La figure 3 est une vue schématique, en perspective, d'une noix 2 de surimi obtenue à l'aide du procédé de l'invention. Cette noix 2 est de forme cylindrique. On distingue sur cette figure 3 les extrémités des fibres juxtaposées constituant la noix, 2 qui sont ici représentées de façon partielle, et qui sont disposées en spirale.

Après mise dans l'emballage primaire, les noix de surimi sont alors prêtes à être vendues.

## Revendications

1. Procédé de fabrication d'un produit alimentaire à base de surimi se présentant sous la forme de noix de pectinidés, tels que les coquilles Saint-Jacques ou les pétoncles, **caractérisé en ce qu'**il comprend les étapes suivantes :
- obtention (S1) d'une bande (1) de surimi de largeur supérieure à 160 mm à partir d'une prémêlée, ou pâte de surimi,
- scarification (S4) de ladite bande (1) de surimi,
- enroulement (S5) de ladite bande (1) de surimi scarifiée afin de former un rouleau de surimi,
- découpe (S2) du rouleau pour former des noix de surimi (2).

2. Procédé selon la revendication 1, **caractérisé en ce que** la largeur de la bande (1) de surimi est comprise entre 160 et 260 mm.

3. Procédé selon la revendication 1 ou 2, **caractérisé en ce que** ladite bande (1) de surimi est obtenue par extrusion.

4. Procédé selon l'une des revendications 1 à 3, **caractérisé en ce que** ladite bande (1) de surimi est pré-cuite préalablement à l'étape de scarification.

5. Procédé selon l'une des revendications 1 à 4, **caractérisé en ce qu'**il comprend une étape de surgélation ou de croûtage (S7) desdites noix (2) de surimi.

6. Procédé selon l'une des revendications 1 à 5, **caractérisé en ce que** la prémêlée comprend :
- de la chair de poisson broyée,
- de l'eau,
- de la fécule,
- de l'amidon,
- du sel,
- du lait écrémé ou du blanc d'oeuf,
- de l'huile de colza non hydrogénée, et
- optionnellement un ou des arômes.

7. Procédé selon l'une des revendications 1 à 6, **caractérisé en ce que** lors de ladite étape de scarification (S4) de ladite bande (1) de surimi, la profondeur de pénétration des outils de scarification dans ladite bande est supérieure à 0.2 mm.

8. Procédé selon l'une des revendications 1 à 7, **caractérisé en ce que** au moins une portion de la bande (1) de surimi n'est pas scarifiée lors de ladite étape de scarification (S4) de ladite bande (1) de surimi.

9. Procédé selon la revendication 8, **caractérisé en ce qu'**au moins deux portions (P1, P2, P3) de la bande ne sont pas scarifiées lors de ladite étape de scarification (S4) de ladite bande (1) de surimi.

10. Chaîne de fabrication de produits alimentaires à base de surimi se présentant sous la forme de noix de pectinidés, tels que les coquilles Saint-Jacques ou les pétoncles, comportant :
- des moyens d'obtention d'une bande (1) de surimi à partir d'une prémêlée, ou pâte de surimi,
- des moyens de scarification de ladite bande (1) de surimi,
- un mécanisme d'enroulement de ladite bande (1) de surimi scarifiée afin de former un rouleau de surimi,
- un mécanisme de découpe du rouleau pour former des noix (2) de surimi, **caractérisée en ce que** les moyens d'obtention d'une bande (1) de surimi sont adaptés pour obtenir une bande de surimi de largeur supérieure à 160 mm.

11. Chaîne de fabrication selon la revendication 10, **caractérisée en ce que** les moyens d'obtention d'une bande (1) de surimi comprennent un mécanisme d'extrusion apte à extruder une bande (1) de surimi de largeur supérieure à 160 mm.

12. Chaîne de fabrication selon la revendication 10 ou 11, **caractérisée en ce qu'**elle comprend un dispositif de pré-cuisson de ladite bande (1) de surimi situé en amont des moyens de scarification.

## Patentansprüche

1. Verfahren zur Herstellung eines Nahrungsmittels auf Basis von Surimi in Form von Nüssen von Pektinidae, wie Jakobsmuscheln oder Kammmuscheln, **dadurch gekennzeichnet, dass** es die folgenden Schritte umfasst:
- Gewinnung (S1) eines Surimistreifens (1) mit einer Breite von mehr als 160 mm aus einer Vormischung oder Surimipaste,
- Ritzung (S4) des Surimistreifens (1),
- Einrollen (S5) des geritzten Surimistreifens (1), um eine Surimirolle zu bilden,
- Schneiden (S2) der Rolle, um Suriminüsse (2) zu bilden.

2. Verfahren nach Anspruch 1, **dadurch gekennzeichnet, dass** die Breite des Surimistreifens (1) zwischen 160 und 260 mm beträgt.

3. Verfahren nach Anspruch 1 oder 2, **dadurch gekennzeichnet, dass** der Surimistreifen (1) durch Fließpressen hergestellt wird.

4. Verfahren nach einem der Ansprüche 1 bis 3, **dadurch gekennzeichnet, dass** der Surimistreifen (1) vor dem Schritt der Ritzung vorgekocht wird.

5. Verfahren nach einem der Ansprüche 1 bis 4, **dadurch gekennzeichnet, dass** es einen Schritt des Tiefkühlens oder Anfrostens (S7) der Suriminüsse (2) umfasst.

6. Verfahren nach einem der Ansprüche 1 bis 5, **dadurch gekennzeichnet, dass** die Vormischung umfasst:
- zerkleinertes Fischfleisch,
- Wasser,
- Stärkemehl,
- Stärke,
- Salz
- Magermilch oder Eiweiß,
- nicht hydriertes Rapsöl, und
- optional ein oder mehrere Aromen.

7. Verfahren nach einem der Ansprüche 1 bis 6, **dadurch gekennzeichnet, dass** bei dem Schritt (S4) der Ritzung des Surimistreifens (1) die Eindringtiefe der Ritzwerkzeuge in den Streifen größer als 0,2 mm ist.

8. Verfahren nach einem der Ansprüche 1 bis 7, **dadurch gekennzeichnet, dass** mindestens ein Abschnitt des Surimistreifens (1) während des Schrittes (S4) der Ritzung des Surimistreifens (1) nicht geritzt wird.

9. Verfahren nach Anspruch 8, **dadurch gekennzeichnet, dass** mindestens zwei Abschnitte (P1, P2, P3) des Streifens während des Schrittes (S4) der Ritzung des Surimistreifens (1) nicht geritzt werden.

10. Herstellungskette von Nahrungsmitteln auf Basis von Surimi in Form von Nüssen von Pektinidae, wie Jakobsmuscheln oder Kammmuscheln, umfassend:
- Mittel zur Gewinnung eines Surimistreifens (1) aus einer Vormischung oder Surimipaste,
- Mittel zur Ritzung des Surimistreifens (1),
- einen Mechanismus zum Einrollen des geritzten Surimistreifens (1), um eine Surimirolle zu bilden,
- einen Mechanismus zum Schneiden der Rolle, um Suriminüsse (2) zu bilden, **dadurch gekennzeichnet, dass** die Mittel zur Herstellung eines Surimistreifens (1) geeignet sind, einen Surimistreifen mit einer Breite von mehr als 160 mm herzustellen.

11. Herstellungskette nach Anspruch 10, **dadurch gekennzeichnet, dass** die Mittel zur Herstellung eines Surimistreifens (1) einen Fließpressmechanismus umfassen, der geeignet ist, einen Surimistreifen (1) mit einer Breite von mehr als 160 mm zu pressen.

12. Herstellungskette nach Anspruch 10 oder 11, **dadurch gekennzeichnet, dass** sie eine Vorrichtung zum Vorkochen des Surimistreifens (1) umfasst, die sich stromaufwärts zu den Ritzmitteln befindet.

## Claims

1. Method for manufacturing a surimi based food product in the form of pectinide rounds, such as scallops or bay scallops, **characterised in that** it comprises the following steps:
- preparing (S1) a surimi strip (1) having a width greater than 160 mm from a pre-mix, or paste of surimi,
- scarifying (S4) said surimi strip (1),
- rolling (S5) said scarified surimi strip (1) so as to form a roll of surimi,
- cutting (S2) the roll to form surimi rounds (2).

2. Method according to claim 1, **characterised in that** the width of the surimi strip (1) is between 160 and 260 mm.

3. Method according to claim 1 or 2, **characterised in that** said surimi strip (1) is obtained by extrusion.

4. Method according to one of claims 1 to 3, **characterised in that** said surimi strip (1) is precooked prior to the scarifying step.

5. Method according to one of claims 1 to 4, **characterised in that** it includes a stage of freezing or crusting (S7) of said surimi rounds (2).

6. Method according to one of claims 1 to 5, **characterised in that** the pre-mix comprises:
- ground fish flesh,
- water,
- potato starch,
- cereal starch,
- salt,
- skimmed milk or egg white,
- non-hydrogenated rapeseed oil, and
- optionally one or more flavourings.

7. Method according to one of claims 1 to 6, **characterised in that** during said step of scarifying (S4) said surimi strip (1), the depth of penetration of the scarifying tools into said strip is greater than 0.2 mm.

8. Method according to one of claims 1 to 7, **characterised in that** at least one portion of the surimi strip (1) is not scarified during said step of scarifying (S4) said surimi strip (1).

9. Method according to claim 8, **characterised in that** at least two portions (P1, P2, P3) of the strip are not scarified during said step of scarifying (S4) said surimi strip (1).

10. Manufacturing chain for a surimi based food product in the form of pectinide rounds, such as scallops or bay scallops, comprising:
- means for preparing a surimi strip (1) from a pre-mix, or paste of surimi,
- means for scarifying said surimi strip (1),
- a mechanism for rolling said scarified surimi strip (1) so as to form a roll of surimi,
- a mechanism for cutting the roll to form surimi rounds (2),
**characterised in that** the means for obtaining a surimi strip (1) are adapted to obtain a surimi strip having a width greater than 160 mm.

11. Manufacturing chain according to claim 10, **characterised in that** the means for obtaining a surimi strip (1) comprise an extrusion mechanism designed to extrude a surimi strip (1) having a width greater than 160 mm.

12. Manufacturing chain according to claim 10 or 11, **characterised in that** it comprises a device for pre-cooking said surimi strip (1) located upstream of the scarifying means.
